# EUROPEAN PATENT APPLICATION

(11) **EP 2 933 281 A1**
(43) Date of publication of application: **21.10.2015**
(21) Application number: 13863288.0
(22) Date of filing: 05.12.2013
(51) Int. Cl.: C08F 290/06, B32B 27/40

(54) **CURABLE RESIN COMPOSITION, LAMINATE USING SAME, AND MANUFACTURING METHOD THEREFOR**

(30) Priority: 14.12.2012 JP 2012273563; 26.04.2013 JP 2013094659
(71) Applicant: Asahi Glass Company, Limited, Tokyo 100-8405 (JP)
(72) Inventor: NAKAMURA, Makito, Tokyo 100-8405 (JP); OGURO, Kaoru, Tokyo 100-8405 (JP)
(74) Representative: Müller-Boré & Partner Patentanwälte PartG mbB
(86) International application number: PCT/JP2013/082740
(87) International publication number: WO 2014/092002

(57) **Abstract**

To provide a curable resin composition which is curable at a high curing speed and which is capable of forming a cured product which is flexible and has color unevenness suppressed, and a laminate using such a curable resin composition and a process for its production.

A curable resin composition comprising an unsaturated urethane oligomer (I) and a specific monomer (II), wherein the oligomer (I) is obtained by reacting a prepolymer (A) with a compound (B) having a (meth)acryloyloxy group and a hydroxyl group, the prepolymer (A) is an isocyanate group-terminated urethane prepolymer obtained by reacting a polyol (A1) with a polyisocyanate (A2) under such a condition that the isocyanate index is more than 100 and at most 160, and the polyol (A1) is a polyoxyalkylene polyol having a hydroxy value of from 3 to 13 mgKOH/g, obtained by reacting an alkylene oxide (a12) having at least 3 carbon atoms to an initiator having an average number of active hydrogen atoms of from 2 to 4; and a laminate obtained by using such a curable resin composition, and a process for its production.

## Description

### TECHNICAL FIELD

The present invention relates to a curable resin composition, and a laminate using the same and a process for its production.

### BACKGROUND ART

As an image display apparatus, an image display apparatus having a protective plate laminated on a display device via a bonding resin layer excellent in transparency, is known.

As a method for laminating transparent substrates such as glass plates via such a bonding resin layer excellent in transparency, for example, the following method is known.

A method wherein a sealing material is disposed along the periphery of a transparent substrate, a layer of a curable resin composition containing a photocurable resin is formed inside of the sealing material, another transparent substrate is overlaid on the layer of a curable resin composition under a reduced pressure to hermetically seal the curable resin composition between the transparent substrates, and then, in an atmospheric pressure atmosphere, the curable resin composition is irradiated with light and cured (Patent Document 1).

As such a curable resin composition, a curable resin composition containing an unsaturated urethane oligomer having photo-curable unsaturated groups such as acryloyloxy groups, methacryloyloxy groups, etc., is known (Patent Documents 1 and 2).

### PRIOR ART DOCUMENTS

### PATENT DOCUMENTS

Patent Document 1: WO09/016943
Patent Document 2: JP-A-2000-351827

### DISCLOSURE OF INVENTION

### TECHNICAL PROBLEM

In recent years, in an image display apparatus having a protective plate laminated, in order to make a curable resin layer to have higher transparency, it has been desired to reduce the cure shrinkage ratio of a curable resin composition and to form a more flexible cured resin layer to reduce color unevenness of an image. However, in a case where the method disclosed in Patent Document 1 is employed for bonding a protective plate to a display device, Patent Document 1 fails to disclose whether or not the transparent cured resin layer thereby obtainable, fully satisfies the demand against such color unevenness in recent years. A flexible cured resin layer may be formed by blending a chain transfer agent to the curable resin composition to adjust the molecular weight, followed by curing. However, when a chain transfer agent is used, the curing speed tends to be slow, and the productivity tends to decrease.

The present invention is to provide a curable resin composition which is curable at a high curing speed and which is capable of forming a cured product which is flexible and has color unevenness suppressed, and a laminate using such a curable resin composition and a process for its production.

### SOLUTION TO PROBLEM

In order to accomplish the above object, the present invention has adopted the following constructions.
[1] A curable resin composition comprising an unsaturated urethane oligomer (I) obtained by reacting the following prepolymer (A) and the following compound (B), and at least one monomer (II) selected from the group consisting of a monomer represented by the following formula (II-1), a monomer represented by the following formula (II-2), a monomer represented by the following formula (II-3) and a monomer represented by the following formula (II-4),
   Prepolymer (A): an isocyanate group-terminated urethane prepolymer obtained by reacting the following polyol (A1) and a polyisocyanate (A2) under such a condition that the isocyanate index is more than 100 and at most 160,
   Polyol (A1): a polyoxyalkylene polyol having a hydroxy value of from 3 to 13 mgKOH/g, obtained by reacting an alkylene oxide (a12) having at least 3 carbon atoms to an initiator (a11) having an average number of active hydrogen atoms of from 2 to 4,
   Compound (B): a compound having the following curable functional group and a hydroxy group,
      Curable functional group: a group represented by CH₂=C(R¹)C(O)O- (wherein R¹ is a hydrogen atom or a methyl group), 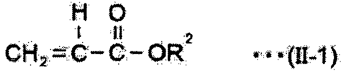 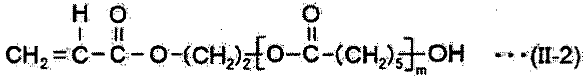 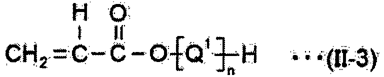 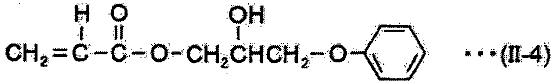 (in the above formulae, R² is a C₂₋₈ hydroxyalkyl group having one or two hydroxy groups, m is an integer of from 1 to 3, Q¹ is a C₂₋₄ oxyalkylene group, and n is an integer of from 2 to 8).
[2] The curable resin composition according to [1], wherein the polyisocyanate (A2) is a polyisocyanate selected from the group consisting of an alicyclic polyisocyanate, an aliphatic polyisocyanate and modified polyisocyanates obtainable by modifying them.
[3] The curable resin composition according to [1] or [2], wherein the compound (B) is a compound represented by the following formula (B1): 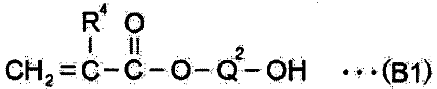 (in the above formula, R⁴ is a hydrogen atom or a methyl group, and Q² is a C₂₋₁₂ alkylene group.)
[4] The curable resin composition according to any one of [1] to [3], wherein the content of the unsaturated urethane oligomer (I) in the curable resin composition is from 20 to 75 mass%.
[5] The curable resin composition according to any one of [1] to [4], wherein the content of the monomer (II) in the curable resin composition is from 25 to 65 mass%.
[6] The curable resin composition according to any one of [1] to [5], which further contains a monomer represented by the following formula (III): 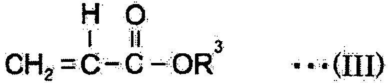 (in the above formula, R³ is a C₈₋₂₂ alkyl group.)
[7] The curable resin composition according to [6], wherein the content of the monomer represented by the formula (III) in the curable resin composition is from 35 to 50 mass%.
[8] The curable resin composition according to any one of [1] to [7], which further contains a photopolymerization initiator (IV).
[9] The curable resin composition according to any one of [1] to [8], wherein in production of a laminate comprising a pair of substrates and a cured resin layer sandwiched between the pair of substrates, the curable resin composition is used for forming the cured resin layer.
[10] A laminate comprising a pair of substrates and a cured resin layer sandwiched between the pair of substrates, wherein the cured resin layer is a layer of a cured resin formed by curing the curable resin composition as defined in any one of [1] to [8].
[11] The laminate according to [10] wherein one of the pair of substrates is a display device and the other is a transparent protective plate, and the cured resin layer is in contact with the viewing side of the display device.
[12] A process for producing a laminate, comprising
   a first step of forming a laminate precursor having the curable resin composition as defined in any one of [1] to [8] accommodated between a pair of substrates and hermetically sealed under reduced pressure atmosphere, and
   a second step of curing the curable resin composition in the laminate precursor in an atmosphere having a pressure higher than the reduced pressure atmosphere.
[13] The process for producing a laminate according to [12], wherein the reduced pressure atmosphere is an atmosphere having a pressure of at most 100 Pa, and the atmosphere having a pressure higher than the reduced pressure atmosphere is an atmospheric pressure atmosphere.
[14] The process for producing a laminate according to [12] or [13], wherein at least one of the pair of substrates is a transparent substrate, and in the second step, the curable resin composition is cured by irradiation with light.
[15] The process for producing a laminate according to any one of [12] to [14], wherein one of the pair of substrates is a display device and the other is a transparent protective plate, and the curable resin composition is accommodated between the viewing side of the display device and the protective plate.

### ADVANTAGEOUS EFFECTS OF INVENTION

The curable resin composition of the present invention is curable at a high curing speed and capable of forming a cured product which is flexible and has color unevenness suppressed.

The laminate of the present invention has a cured product which is flexible and has color unevenness suppressed, and it has high productivity.

According to the process of the present invention, it is possible to produce in high productivity a laminate having a cured resin layer which is flexible and has color unevenness suppressed. Especially when the curable resin composition of the present invention is employed for bonding a protective plate to a display device, it is possible to obtain an image display apparatus having good physical properties such as optical properties, etc.

### BRIEF DESCRIPTION OF DRAWING

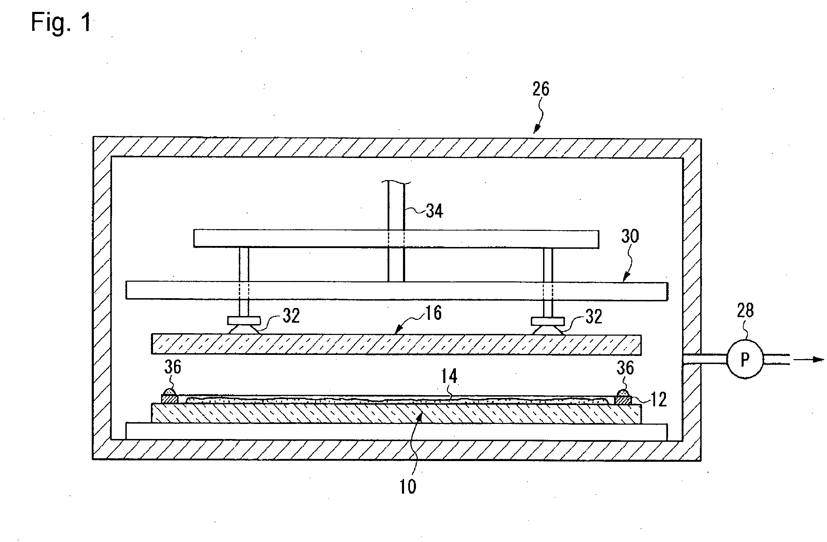

Fig. 1 is a cross-sectional view showing one step in the process for producing a laminate of the present invention.

### DESCRIPTION OF EMBODIMENTS

In this specification, an acryloyloxy group and a methacryloyloxy group may generally be referred to as a (meth)acryloyloxy group. Likewise, an acrylate and a methacrylate may generally be referred to as a (meth)acrylate. Further, acrylic acid and methacrylic acid may generally be referred to as (meth)acrylic acid.

Here, the curable functional group, i.e. the group represented by CH₂=C(R¹)C(O)O- (wherein R¹ is a hydrogen atom or a methyl group), is a (meth)acryloyloxy group.

Further, a compound represented by the formula (B1) may be referred to as a compound (B1), and compounds and monomers represented by other formulae may be referred to in the same manner.

In the present invention, "transparent" means a mode wherein from one side, the other side is visible with respect to a part or whole of e.g. a cured product of the curable resin composition or a substrate. Even in a case where the visible ray transmittance is low due to e.g. absorption, reflection or optical phase change of a part of light entering into the cured product or the substrate, a mode wherein from one side, the other side is visible, is included in "transparent".

For example, in an image display apparatus having a protective plate bonded to a liquid crystal display device (one having the outermost layer of a display surface made of a polarizing plate) by a cured product of the curable resin composition, the laminated portion of the polarizing plate, the cured product and the protective plate may be regarded as a transparent laminate. In such a laminate, one of substrates is the polarizing plate and the other substrate is the protective plate, and both correspond to transparent substrates. Here, if the entire liquid crystal display device is considered to be one substrate, such a substrate is a non-transparent substrate.

The laminate of the present invention is not limited to a transparent laminate, and the substrates may be non-transparent substrates. Preferably at least one of the pair of substrates is a transparent substrate, and more preferably, both of the pair of substrates are transparent substrates.

### <Curable resin composition>

The curable resin composition of the present invention is a curable resin composition comprising the unsaturated urethane oligomer (I) (hereinafter referred to as the "oligomer (I)") and the monomer (II). The curable resin composition of the present invention is useful for a process for producing a transparent laminate by curing the curable resin composition sandwiched between a pair of transparent substrates.

### [Oligomer (I)]

The oligomer (I) is a reaction product obtainable by reacting the prepolymer (A) as the after-described isocyanate group-terminated urethane prepolymer, and the compound (B). The oligomer (I) has a (meth)acryloyloxy group as described later.

### (Prepolymer (A))

The prepolymer (A) is an urethane prepolymer obtained by reacting the after-described polyol (A1) and a polyisocyanate (A2) under such a condition that the isocyanate index is more than 100 and at most 160. The prepolymer (A) has an isocyanate group at its terminal.

By reacting the polyol (A1) and the polyisocyanate (A2) under such a condition that the isocyanate index is more than 100 and at most 160, the finally obtainable oligomer (I) becomes an unsaturated urethane oligomer which is curable at a sufficient curing speed and which is capable of forming a cured product which is flexible and has color unevenness suppressed. The lower limit value for the above isocyanate index is preferably 103, more preferably 105, whereby the strength of the cured product will be good. The upper limit value for the above isocyanate index is preferably 150, more preferably 130, whereby it is possible to obtain a cured product which is more flexible and has color unevenness suppressed.

Here, the isocyanate index is a value obtained by dividing the number of moles of isocyanate groups in the polyisocyanate (A2) by the number of moles of hydroxy groups in the polyol (A1), followed by multiplying 100 times.

As the prepolymer (A), one type may be used alone, or two or more types may be used in combination.

The polyol (A1) is a polyoxyalkylene polyol having a hydroxy value of from 3 to 13 mgKOH/g, obtained by reacting an alkylene oxide (a12) having at least 3 carbon atoms to an initiator (a11) having an average number of active hydrogen atoms of from 2 to 4.

The polyol (A1) has a polyoxyalkylene chain made of an oxyalkylene group having at least 3 carbon atoms. The polyol (A1) is preferably a polyoxyalkylene polyol obtainable by reacting an alkylene oxide (a12) to the initiator (a11) in the presence of a catalyst (a13).

As the polyol (A1), one type may be used alone, or two or more types may be used in combination.

The unsaturation value (USV) of the polyol (A1) is preferably at most 0.05.

For example, if by using a general purpose alkali metal compound catalyst (such as potassium hydroxide), propylene oxide (hereinafter referred to as "PO") is reacted to an initiator to obtain a polyoxyalkylene polyol having a low hydroxy value, an isomerization reaction of PO is likely to take place, and due to allyl alcohol formed by the isomerization reaction, the unsaturation value tends to be high. A cured product containing an oligomer (I) obtainable by using such a polyoxyalkylene polyol having a high unsaturation value, is likely to be inadequate in the mechanical properties.

The catalyst (a 13) may, for example, be diethyl zinc, iron chloride, metal porphyrin, a composite metal cyanide complex, a cesium compound or an alkali (alkaline earth) metal compound. Among them, an alkali metal compound catalyst or a composite metal cyanide complex is preferred.

In order to produce a polyol (A1) having a low hydroxy value and a low unsaturation value, a composite metal cyanide complex is particularly preferred as the catalyst (a 13).

The composite metal cyanide complex is preferably a complex containing zinc hexacyanocobaltate as the main component, particularly preferably an ether complex or alcohol complex of zinc hexacyanocobaltate, or both of them. The ether complex or alcohol complex of zinc hexacyanocobaltate may, for example, be one disclosed in JP-B-46-27250.

The ether to form a complex with zinc hexacyanocobaltate is preferably ethylene glycol dimethyl ether (glyme) or diethylene glycol dimethyl ether, and from the viewpoint of handling efficiency at the time of producing the complex, glyme is particularly preferred.

The alcohol to form a complex with zinc hexacyanocobaltate is preferably tert-butanol or tert-butyl cellosolve.

The average number of active hydrogen atoms of the initiator (a11) is from 2 to 4, preferably from 2 to 3.

The active hydrogen is meant for an active hydrogen atom such as a hydrogen atom of a hydroxy group or a hydrogen atom of an amino group, to which an alkylene oxide is reactive. The active hydrogen is preferably a hydrogen atom of a hydroxy group. Accordingly, the initiator (a11) is preferably a polyhydroxy compound having an average number of hydroxy groups of from 2 to 4, more preferably a polyhydroxy compound having an average number of hydroxy groups of from 2 to 3.

When the average number of hydroxy groups in the initiator (a 11) is within this range, the average number of hydroxy groups in the obtainable polyol (A1) will also be within the same range.

The initiator (a11) may, for example, be ethylene glycol, diethylene glycol, propylene glycol, dipropylene glycol, neopentyl glycol, 1,4-butanediol, 1,6-hexanediol, glycerol, trimethylolpropane, pentaerythritol, or a polyoxyalkylene polyol having a molecular weight lower than the polyol (A1), which is obtainable by reacting an alkylene oxide to such a polyol.

In a case where a composite metal cyanide complex is used as the catalyst (a13), the molecular weight of the initiator (a11) is preferably from 500 to 1,500. Specifically, the initiator (a11) is preferably a polyoxypropylene polyol having a molecular weight of from 500 to 1,500, obtainable by reacting PO to a bivalent to tetravalent polyhydric alcohol.

As the initiator (a11), one type may be used alone, or two or more types may be used in combination.

The alkylene oxide (a12) is an alkylene oxide having at least 3 carbon atoms.

The alkylene oxide having at least 3 carbon atoms, may, for example, be PO, 1,2-butylene oxide, 2,3-butylene oxide or styrene oxide. Among them, PO is preferred as the alkylene oxide (a12). When the alkylene oxide (a12) is PO, the physical properties of a cured product will be flexible, such being desirable.

As the alkylene oxide (a12), one type may be used alone, or two or more types may be used in combination.

The alkylene oxide (a12) is an alkylene oxide other than ethylene oxide having two carbon atoms (hereinafter referred to as "EO"). The polyol (A1) contains no oxyethylene group, whereby the transparency of a cured product of the obtainable oligomer (I) will be good.

The average number of hydroxy groups per molecule of the polyol (A1) is from 2 to 4, preferably from 2 to 3. When the average number of hydroxy groups per molecule of the polyol (A1) is from 2 to 4, an oligomer (I) having an average number of (meth)acryloyloxy groups per molecule of from 2 to 4 will be easily obtainable.

The average number of hydroxy groups per molecule of the polyol (A1) corresponds to the number of active hydrogen atoms per molecule of the initiator (a11) in a case where the initiator (a11) is one type only, or corresponds to the average number of active hydrogen atoms per molecule of the initiator (a11) in a case where the initiator (a11) is a mixture of two types.

The hydroxy value of the polyol (A1) is from 3 to 13 mgKOH/g, preferably from 4 to 12 mgKOH/g, more preferably from 5.5 to 10 mgKOH/g. When the hydroxy value of the polyol (A1) is at least the lower limit value, the strength of a cured product will be good. Further, it is possible to prevent the viscosity from becoming too high as the molecular weight of the polyol (A1) becomes large, and the operation efficiency at the time of producing the prepolymer (A) will be good. When the hydroxy value of the polyol (A1) is at most the upper limit value, a cured product which is flexible and has color unevenness suppressed, will be formed at a high curing speed.

Here, the hydroxy value of the polyol (A1) is a value measured in accordance with JIS K1557-1 (2007 edition).

When a polyol (A1) having a hydroxy value within the above range, is used, a cured product of a curable resin composition, which is flexible and has color unevenness suppressed, will be obtained, whereby there will be no deterioration in reactivity due to e.g. a chain transfer agent.

The polyisocyanate (A2) may, for example, be an alicyclic polyisocyanate, an aliphatic polyisocyanate or a modified polyisocyanate obtainable by modifying it, wherein the average number of isocyanate groups per molecule is at least 2. The aliphatic polyisocyanate may contain a polyisocyanate having an aromatic ring. It is preferred not to use an aromatic polyisocyanate having isocyanate groups bonded to an aromatic ring, since such an aromatic polyisocyanate is likely to bring about yellowing of a cured resin.

The average number of isocyanate groups per molecule of the polyisocyanate (A2) is preferably from 2 to 4, particularly preferably 2. That is, a diisocyanate is preferred as the polyisocyanate (A2).

As the polyisocyanate (A2), one type may be used alone, or two or more types may be used in combination.

Specific examples of the polyisocyanate (A2) may, for example, be a diisocyanate such as isophorone diisocyanate, dicyclohexylmethane diisocyanate, hexamethylene diisocyanate or xylene diisocyanate, and a prepolymer-modified product, a nurate-modified product, a urea-modified product or a carbodiimide-modified product of such a diisocyanate. Among them, isophorone diisocyanate or hexamethylene diisocyanate is preferred.

### (Compound (B))

The compound (B) is a compound having the following curable functional group i.e. a (meth)acryloyloxy group, and a hydroxy group.

Curable functional group: a group represented by CH₂=C(R¹)C(O)O- (wherein R¹ is a hydrogen atom or a methyl group).

By reacting the prepolymer (A) and the compound (B), an isocyanate group at a terminal of the prepolymer (A) and a hydroxy group of the compound (B) are reacted to form a urethane bond, whereby an oligomer (I) having a (meth)acryloyloxy group is obtainable.

The compound (B) may have one or more such curable functional groups per molecule. Further, the compound (B) may have one or more hydroxy groups per molecule.

In a case where a diisocyanate is used as the polyisocyanate (A2), in order to produce a prepolymer (A) having from 2 to 4 curable functional groups on average, a compound (B) having one such curable functional group and one hydroxyl group per molecule is preferred.

The following compound (B1) is preferred as the compound (B).

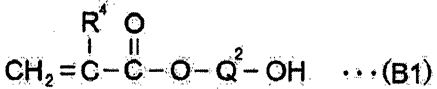

Here, in the above formula, R⁴ is a hydrogen atom or a methyl group, and Q² is a C₂₋₁₂ alkylene group.

In order to obtain an oligomer (I) having a high reactivity, R⁴ in the formula (B1) is preferably a hydrogen atom. That is, the curable functional group in the compound (B1) is preferably an acryloyloxy group.

Q² in the formula (B1) is preferably a C₂₋₈ alkylene group, more preferably a C₂₋₄ alkylene group.

The compound (B) is more preferably a hydroxyalkyl acrylate having a C₂₋₄ hydroxyalkyl group, among such compounds (B1).

The monomer (B) may, for example, be 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth)acrylate, pentanediol mono(meth)acrylate or hexanediol mono(meth)acrylate. Among them, 2-hydroxyethyl (meth)acrylate or 2-hydroxypropyl (meth)acrylate is preferred, and 2-hydroxyethyl acrylate or 2-hydroxypropyl acrylate is particularly preferred.

As the compound (B), one type may be used alone, or two or more types may be used in combination.

### (Oligomer (I))

The oligomer (I) is a reaction product of the above-described prepolymer (A) and compound (B). The oligomer (I) may have both of an acryloyloxy group and a methacryloyloxy group, but preferably has either an acryloyloxy group or a methacryloyloxy group, more preferably has only an acryloyloxy group. The oligomer (I) has a high molecular weight, whereby the reactivity i.e. the curability of a (meth)acryloyloxy group tends to be low. Therefore, in a case where it is used in combination with a monomer having a relatively low molecular weight, by using an oligomer (I) having an acryloyloxy group with a reactivity higher than a methacryloyloxy group, the difference in the curability between the oligomer (I) and the monomer used in combination, is made small, whereby a uniform cured product tends to be readily obtainable.

The number of (meth)acryloyloxy groups on average per molecule of the oligomer (I) is preferably from 2 to 4, more preferably from 2 to 3.

When the number of (meth)acryloyloxy groups is at least the lower limit value, a cured product is less susceptible to deformation even if exposed at a high temperature. When the number of (meth)acryloyloxy groups is at most the upper limit value, a cured product is less likely to be brittle.

The number of (meth)acryloyloxy groups in the oligomer (I) can be adjusted by the number of hydroxy groups in the polyol (A1), the number of isocyanate groups in the polyisocyanate (A2), and the number of curable functional groups and the number of hydroxyl groups in the compound (B).

In a case where the number of isocyanate groups in the polyisocyanate (A2) is 2, if each of the number of (meth)acryloyloxy groups and the number of hydroxy groups in the compound (B) is 1, the number of (meth)acryloyloxy groups on average per molecule of the oligomer (I) becomes substantially the same as the average number of hydroxy groups per molecule of the polyol (A1).

For example, in a case where a diisocyanate is used as the polyisocyanate (A2) and a compound (B1) is used as the compound (B), by using only a diol as the polyol (A1), an oligomer (I) having an average number of (meth)acryloyloxy groups per molecule of 2 is obtainable. Likewise, by using a diol and a triol as the polyol (A1), an oligomer (I) having an average number of (meth)acryloyloxy groups per molecule between 2 and 3 is obtainable, and by using only a triol as the polyol (A1), an oligomer (I) having an average number of (meth)acryloyloxy groups per molecule of 3 is obtainable.

The oligomer (I) to be contained in the curable resin composition of the present invention may be one type only, or two or more types.

### (Process for producing oligomer (I))

The process for producing an oligomer (I) may, for example, be a process having the following steps (i) and (ii).
Step (i): A polyol (A1) and a polyisocyanate (A2) are reacted under such a condition that the isocyanate index is more than 100 and at most 160 to obtain a prepolymer (A).
Step (ii): In the presence of a polymerization inhibitor as the case requires, the prepolymer (A) and a compound (B) are reacted to obtain an oligomer (I). Step (i):
   For the reaction of the polyol (A1) and the polyisocyanate (A2), it is preferred to use an urethanization catalyst.

The urethanization catalyst may, for example, be cobalt naphthenate, zinc naphthenate, zinc 2-ethylhexanoate, dibutyltin dilaurate, tin 2-ethylhexanoate, triethylamine or 1,4-diazabicyclo[2.2.2]octane.

The reaction temperature is preferably from 30 to 90°C.

### Step (ii):

The polymerization inhibitor may, for example, be hydroquinone, hydroquinone monomethyl ether, 2,5-di-tert-butylhydroquinone, 2,6-di-tert-butylhydroquinone or o-nitrotoluene.

The amount of the polymerization inhibitor to be used, is preferably from 50 to 5,000 mass ppm to the total mass of the compound (B) to be used for the reaction.

The ratio of the prepolymer (A) to the compound (B) to be used for the reaction is adjusted so that the molar ratio of isocyanate groups in the prepolymer (A):hydroxy groups in the compound (B) would be preferably from 1:1 to 1:1.5, more preferably from 1:1 to 1:1.02.

The reaction temperature is preferably from 30 to 90°C.

### [Monomer (II)]

The curable resin composition of the present invention contains, in addition to the oligomer (I), at least one monomer (II) selected from the group consisting of the following monomer (II-1), the following monomer (II-2), the following monomer (II-3) and the following monomer (II-4).

As the curable resin composition contains the monomer (II), the hydrophilicity of a cured product thereby obtainable will be increased. Therefore, in a case where a cured resin layer in a laminate is formed by the curable resin composition of the present invention and at least one of substrates is a glass plate, the affinity between the cured resin layer and the glass plate is improved, whereby their adhesion is increased. Further, as the curable resin composition contains the monomer (II), the strength of a cured product will also be increased.

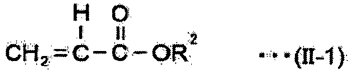

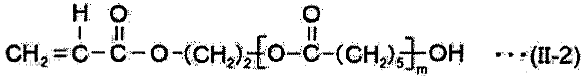

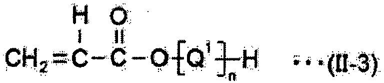

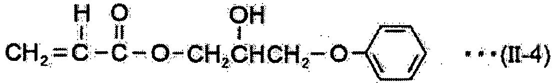

In the above formulae, R² is a C₂₋₈ hydroxyalkyl group having one or two hydroxy groups, m is an integer of from 1 to 3, Q¹ is a C₂₋₄ oxyalkylene group, and n is an integer of from 2 to 8.

The number of hydroxy groups in the hydroxyalkyl group for R² in the formula (II-1) is preferably 1, whereby the flexibility will be excellent. Further, the number of carbon atoms in the hydroxyalkyl group for R² is preferably from 2 to 6, whereby the adhesion, flexibility and low volatility will be excellent.

The monomer (II-1) may, for example, be 2-hydroxyethyl acrylate, 2-hydroxypropyl acrylate, 3-hydroxypropyl acrylate, 2-hydroxybutyl acrylate, 4-hydroxybutyl acrylate, pentanediol monoacrylate, hexanediol monoacrylate or 8-hydroxyoctyl acrylate. Among them, 2-hydroxyethyl acrylate, 2-hydroxypropyl acrylate or 4-hydroxybutyl acrylate is preferred as the monomer (II-1).

m is preferably from 1 to 3, whereby the adhesion will be excellent, and the viscosity will be low.

The monomer (II-2) may, for example, be caprolactone acrylate, and as a commercial product, caprolactone acrylate (trade name: SR-495) manufactured by Sartomer Company may, for example, be mentioned.

Q¹ is preferably an oxyethylene group. n is preferably from 2 to 5, whereby the adhesion will be excellent, and the viscosity will be low.

The monomer (II-3) may, for example, be polypropylene glycol monoacrylate, polyethylene glycol monoacrylate or poly(oxypropylene/oxyethylene) glycol monoacrylate. Among them, polypropylene glycol monoacrylate is preferred as the monomer (II-3).

As the monomer (II), one type may be used alone, or two or more types may be used in combination.

The monomer (II) has an acryloyloxy group as a curable functional group, whereby not only the reactivity is high, but also the transparency of a cured product will be good even when a polyol (A1) containing no oxyethylene group is used as a raw material for the oligomer (I). This is considered to be attributable to good compatibility between the oligomer (I) and the monomer (II).

### [Monomer (III)]

The curable resin composition of the present invention preferably contains the following monomer (III) in addition to the oligomer (I) and the monomer (II).

In such an embodiment that the curable resin composition contains the monomer (III), the elastic modulus of a cured product thereby obtainable tends to be low, and the tear resistance will be improved. 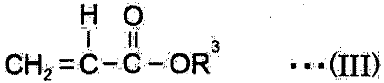 In the above formula, R³ is a C₈₋₂₂ alkyl group.

The number of carbon atoms in the alkyl group for R³ in the above formula (III) is from 8 to 22, preferably from 10 to 18. When the number of carbon atoms is at least 8, it is possible to prevent the volatility of the monomer from becoming too high or prevent the glass transition temperature of a cured product from becoming too high. Further, when the number of carbon atoms is at most 22, the raw material alcohol component is derived from a natural product and is readily available at a relatively low cost.

As the monomer (III), one type may be used alone, or two or more types may be used in combination.

The monomer (III) has an acryloyloxy group as a curable functional group, whereby not only the reactivity is high, but also the transparency of a cured product will be good even when a polyol (A1) containing no oxyethylene group is used as a raw material for the oligomer (I). This is considered to be attributable to good compatibility between the oligomer (I) and the monomer (III).

The monomer (III) may, for example, be n-lauryl acrylate, n-tridecyl acrylate, n-dodecyl acrylate, n-octadecyl acrylate, n-behenyl acrylate, n-stearyl acrylate, iso-decyl acrylate, iso-octyl acrylate or iso-stearyl acrylate. Among them, n-lauryl acrylate, n-tridecyl acrylate, n-dodecyl acrylate or n-octadecyl acrylate is preferred.

### [Photopolymerization initiator (IV)]

The curable resin composition of the present invention preferably contains a photopolymerization initiator (IV). That is, the curable resin composition of the present invention is preferably a photocurable resin composition such that the curing reaction proceeds by irradiation with light.

The photopolymerization initiator (IV) is preferably one which will be excited and activated by irradiation with visible light ray or ultraviolet ray (wavelength of from 300 to 400 nm) to promote the curing reaction. Specifically, a benzoin ether type photopolymerization initiator, an α-hydroxyalkylphenone type photopolymerization initiator or an acylphosphine oxide type photopolymerization initiator may, for example, be mentioned.

Specific examples of the photopolymerization initiator (IV) may, for example, be benzophenone, 4-chlorobenzophenone, 4,4'-dimethoxybenzophenone, 4,4'-diaminobenzophenone, acetophenone, 3-methylacetophenone, benzoyl, benzoin isobutyl ether, benzoin isopropyl ether, benzoin ethyl ether, anthraquinone, 1-hydroxycyclohexylphenyl ketone, 2-hydroxy-2-methyl-1-phenylpropan-1-one, 1-[4-(2-hydroxyethoxy)-phenyl]-2-hydroxy-2-methyl-1-propan-1-one or bis(2,4,6-trimethylbenzoyl)-phenylphosphine oxide. Among them, an acylphosphine oxide type photopolymerization initiator such as 1-hydroxycyclohexylphenyl ketone, 1-[4-(2-hydroxyethoxy)-phenyl]-2-hydroxy-2-methyl-1-propan-1-one or bis(2,4,6-trimethylbenzoyl)-phenylphosphine oxide, is preferred, and from such a viewpoint that even by an addition of a small amount, the curable resin composition can sufficiently be cured, particularly preferred is 1-hydroxycyclohexylphenyl ketone or bis(2,4,6-trimethylbenzoyl)-phenylphosphine oxide.

As the photopolymerization initiator (IV), one type may be used alone, or two or more types may be used in combination.

### [Other components (V)]

The curable resin composition of the present invention may contain other components (V) other than the oligomer (I), the monomer (II), the monomer (III) and the photopolymerization initiator (IV) within a range not to impair the effects of the present invention. For example, the curable resin composition of the present invention may contain other oligomers other than the oligomer (I) for the purpose of adjusting the physical properties of a cured product to be obtained.

As such other oligomers, an urethane (meth)acrylate oligomer obtainable by using a polyol other than the polyol (A1), a poly(meth)acrylate obtainable by reacting (meth)acrylic acid to a polyoxyalkylene polyol, and a poly(meth)acrylate obtainable by reacting (meth)acrylic acid to a polyester polyol, may, for example, be mentioned.

Further, it may contain another monomer other than the monomer (II) and the monomer (III) for the purpose of adjusting the physical properties of a cured product to be obtained.

As such another monomer, a compound having from 1 to 6 (meth)acryloyloxy groups is preferred, and from such viewpoint that a flexible cured product is readily obtainable, a compound having 1 or 2 (meth)acryloyloxy groups is more preferred. Further, with a view to improving the coating properties of the curable resin composition, such another monomer is preferably a monomer having a low viscosity such that the viscosity at 25°C is at most 1 Pa·s. The monomer having a low viscosity may sometimes be called a reactive diluent. The viscosity is a value which is measured by using an E-type viscometer (RE-85U, manufactured by Toki Sangyo Co., Ltd.).

As another monomer, a poly(meth)acrylate obtainable by reacting (meth)acrylic acid to a polyhydric alcohol may, for example, be mentioned. As another monomer, a compound having a methacryloyloxy group may be used, so long as it will not impair the transparency, but it is preferably a compound having an acryloyloxy group.

Further, to the curable resin composition, various additives may be added depending upon the particular applications. As such additives, an antioxidant, an ultraviolet absorber, a light stabilizer, a pigment, a dye, metal oxide fine particles, a filler, etc. may be mentioned.

The ultraviolet absorber is one to be used to prevent deterioration by light of the curable resin composition thereby to improve the weather resistance, and for example, an ultraviolet absorber of benzotriazole type, triazine type, benzophenone type, benzoate type or the like, may be mentioned.

The benzotriazole type ultraviolet absorber may, for example, be 2-(2-hydroxy-5-methylphenyl)benzotriazole, 2,4-bis(1-methyl-1-phenylethyl)-6-(2H-benzotriazol-2-yl)phenol, 2-(5-chloro-2-benzotriazolyl)-6-tert-butyl-p-cresol, 2-(2-hydroxy-5-tert-octylphenyl)benzotriazole, (2,2-methylenebis[6-(2H-benzotriazol-2-yl)-4-(1,1,3,3-tetramethylbutyl)phenol], or 2-(2H-benzotriazol-2-yl)-4,6-bis(1,1-dimethyl-propyl)-phenol.

The triazine type ultraviolet absorber may, for example, be 2-[4,6-diphenyl-1,3,5-triazin-2-yl]-5-(hexyloxy)phenol, or 2-[4,6-bis(2,4-dimethylphenyl)-1,3,5-triazin-2-yl]-5-(isooctyloxy)-phenol.

The benzophenone type ultraviolet absorber may, for example, be 2-hydroxy-4-n-octyloxybenzophenone, or (2,4-dihydroxyphenyl)phenyl-methanone.

The benzoate type ultraviolet absorber may, for example, be 2-[4,6-diphenyl-1,3,5-triazin-2-yl]-5-(hexyloxy)phenol.

The light stabilizer is one to be used for preventing deterioration by light of the curable resin composition thereby to improve the weather resistance, and for example, a hindered amine type light stabilizer may be mentioned.

The hindered amine type light stabilizer may, for example, be N,N'-bis(2,2,6,6-tetramethyl-4-piperidinyl)-N'-[4-[butyl(2,2,6,6-tetramethyl-4-piperidinyl)amino]-1,3,5-triazin-2-yl]-1,6-hexanediamine, 1-[2-(4-hydroxy-2,2,6,6-tetramethylpiperidino)ethyl] butanedioate, bis(1,2,2,6,6-pentamethylpiperidin-4-yl) 2-butyl-2-(4-hydroxy-3,5-di-tert-butylbenzyl) malonate, bis(1,2,2,6,6-pentamethylpiperidin-4-yl) decanedioate, bis(2,2,6,6-tetramethyl-4-piperidinyl) decanedioate, tetrakis(1,2,2,6,6-pentamethyl-4-piperidinyl) butane-1,2,3,4-tetracarboxylate, tetrakis(2,2,6,6-tetramethylpiperidin-4-yl) 1,2,3,4- butane-tetracarboxylate, 1,2,2,6,6-pentamethyl-4-piperidyl methacrylate; (1,2,2,6,6-pentamethylpiperidin-4-yl) methacrylate, 2,2,6,6-tetramethyl-4-piperidyl methacrylate, 7-oxa-3,20-diazadispiro[5.1.11.2]heneicosane-20-propanoic acid, 2,2,4,4-tetramethyl-21-oxo, dodecyl/tetradecyl ester, 2,2,4,4-tetramethyl-7-oxa-3,20 diazadispiro[5.1.11.2]-heneicosane-21-one, β-alanine, N-(2,2,4,4-tetramethyl-4-piperidinyl)-, dodecyl/tetradecyl ester, 2,5-pyrrolidinedione, 3-dodecyl-1-(2,2,6,6-tetramethyl-4-piperidinyl), 2,5-pyrrolidinedione, or N-acetyl-3-dodecyl-1-(2,2,6,6-tetramethyl-4-piperidinyl).

The antioxidant is one to be used for preventing oxidation of the curable resin composition thereby to improve the weather resistance and heat resistance, and for example, an antioxidant of phenol type or phosphorus type may be mentioned.

The phenol type antioxidant may, for example, be pentaerythritol tetrakis[3-(3,5-di-tert-butyl-4-hydroxyphenyl)propionate], 2,2'-thiodiethylbis[3-(3,5-di-tert-butyl-4-hydroxyphenyl)propionate], stearyl 3-(3,5-di-tert-butyl-4-hydroxyphenyl) propionate, N,N'-(1,6-hexanediyl)bis[3,5-bis(1,1-dimethylethyl)-4-hydroxybenzenepropanamide], octyl-3,5-di-tert-butyl-4-hydroxy-hydrocinnamic acid, 2,4,6-tris(3',5'-di-tert-butyl-4'-hydroxybenzyl)mesitylene, calcium bis[3,5-di(tert-butyl)-4-hydroxybenzyl(ethoxy)phosphinate], 2,4-bis(octylthiomethyl)-6-methylphenol, 2,4-bis[(octylthio)methyl]-6-methylphenol, ethylenebis(oxy-2,1-ethanediyl) bis[3-(1,1-dimethylethyl)-4-hydroxy-5-methylbenzene propionate], 1,6-hexanediol-bis[3(3,5-di-tert-butyl-4-hydroxyphenyl) propionate], 1,3,5-tris[[3,5-bis(1,1-dimethylethyl)-4-hydroxyphenyl]methyl]-1,3,5-triazine-2,4,6(1H,3H,5H)-trione, 1,1'-iminobis[4-(1,1,3,3-tetramethylbutyl)benzene], 4-[[4,6-bis(octylthio)-1,3,5-triazin-2-yl]amino]-2,6-di-tert-butylphenol, or diethyl{[3,5-bis(1,1-dimethylethyl)-4-hydroxyphenyl]methyl} phosphonate.

The phosphorus type antioxidant may, for example, be triphenyl phosphite, diphenylisodecyl phosphite, phenyldiisodecyl phosphite, 4,4'-butylidene-bis(3-methyl-6-t-butylphenylditridecyl) phosphite, cyclic neopentanetetraylbis(nonylphenyl) phosphite, cyclic neopentanetetraylbis(dinonylphenyl) phosphite, cyclic neopentanetetrayltris(nonylphenyl) phosphite, cyclic neopentanetetrayltris(dinonylphenyl) phosphite, 10-(2,5-dihydroxyphenyl)-10H-9-oxa-10-phosphaphenanthrene-10-oxide, diisodecylpentaerythritol diphosphite, tris(2,4-di-t-butylphenyl) phosphite, bis(2,4-di-tert-butyl-6-methylphenyl)=ethyl=phosphite, or butylidene bis[(2-tert-butyl-5-methyl-4,1-phenylene)oxy]bis(ditridecyl phosphinate).

Further, a product having a plurality of antioxidants, light stabilizers, etc. mixed, may be used. For example, IRGASTAB PUR68, TINUVIN B75, etc. manufactured by BASF may be mentioned.

Further, instead of the photopolymerization initiator (IV), a curing agent which generates radicals by heat, may be incorporated to the curable resin composition.

Further, to the curable resin composition, a solvent may be incorporated as a coating composition to improve the coating properties. In such as case, after applying the coating composition, the solvent is removed to obtain a curable resin composition, which is then cured. However, in a case where the curable resin composition of the present invention is to be used for the production of a laminate as described later, it is undesirable to have a volatile component, and therefore, it is preferred not to use a solvent.

### [Preferred composition]

Particularly in the case of using it for the production of a laminate as described later, the curable resin composition of the present invention is preferably a curable resin composition comprising the oligomer (I), the monomer (II) and the monomer (III). Further, it is more preferred that the curable resin composition of the present invention further contains a photopolymerization initiator (IV).

Further, the curable resin composition of the present invention may be a composition composed solely of the oligomer (I) and the monomer (II).

The content of the oligomer (I) in the curable resin composition (100 mass%) of the present invention is preferably from 20 to 75 mass%, more preferably from 40 to 60 mass%. When the content of the oligomer (I) is at least the lower limit value, a cured product will be less likely to be deformed even when exposed to a high temperature. When the content of the oligomer (I) is at most the upper limit value, a cured product will be less likely to be brittle.

The content of the monomer (II) in the curable resin composition (100 mass%) of the present invention is preferably from 25 to 65 mass%, more preferably from 35 to 50 mass%. When the content of the monomer (II) is at least the lower limit value, at the time of producing a laminate, the adhesion and tear resistance between a cured resin layer and a substrate will be good. When the content of the monomer (II) is at most the upper limit value, a cured product will be excellent in transparency.

In a case where the curable resin composition of the present invention contains the monomer (III), the content of the monomer (III) in the curable resin composition (100 mass%) of the present invention is preferably from 3 to 50 mass%, more preferably from 5 to 25 mass%. When the content of the monomer (III) is at least the lower limit value, the flexibility of a cured product will be good. When the content of the monomer (III) is at most the upper limit value, a curing speed will be excellent.

In a case where the curable resin composition of the present invention contains the photopolymerization initiator (IV), the content of the photopolymerization initiator (IV) in the curable resin composition of the present invention is preferably from 0.01 to 10 parts by mass, more preferably from 0.1 to 2.5 parts by mass, per 100 parts by mass of the oligomer (I).

In a case where the curable resin composition of the present invention contains the above-mentioned other components (V), the content of such other components (V) in the curable resin composition (100 mass%) of the present invention is preferably at most 10 mass%, more preferably at most 5 mass%.

Further, in the case of producing a laminate by a production process using a vacuum lamination method as described later, the area exposed to a vacuum atmosphere in the curable resin composition is relatively large, and therefore, it is preferred that the curable resin composition contains no low boiling point compound. It is thereby possible to prevent a substantial change of the composition due to vaporization of the low boiling point compound in the curable resin composition and to make it easy to maintain the desired vacuum atmosphere.

Specifically, the curable resin composition in the case of producing a laminate by the production process using the vacuum lamination method, preferably does not contain a monomer having a boiling point of at most 150°C in the atmospheric pressure atmosphere, more preferably does not contain a monomer having a boiling point of at most 200°C in the atmospheric pressure atmosphere. The boiling points of the monomer (II) and the monomer (III) are higher than 200°C. An alkyl (meth)acrylate having a number of carbon atoms smaller than the alkyl group of the monomer (III) is likely to have a low boiling point in many cases, and such an alkyl (meth)acrylate should better be not contained.

The viscosity V₄₀ at 40°C of the curable resin composition of the present invention is preferably at most 50 Pa·s, more preferably at most 5 Pa·s. Further, the viscosity V₂₅ at 25°C of the curable resin composition of the present invention is preferably at least 0.05 Pa·s, more preferably at least 0.20 Pa·s. When V₄₀ is at most the upper limit value, sufficient fluidity is obtainable, and air bubbles are less likely to be formed in the curable resin composition. When the viscosity V₂₅ is at least the lower limit value, it is unnecessary to use a large amount of a monomer having a low molecular weight in order to lower the viscosity, and therefore, the physical properties of a cured product will be less likely to deteriorate.

Here, the viscosity is a value to be measured by using an E-type viscometer (RE-85U, manufactured by Toki Sangyo Co., Ltd.). However, in a case where the viscosity of the curable resin composition is 100 Pa·s or less, as a rotor, 1°34'×R24 should be used, and in the case of a viscosity exceeding 100 Pa·s, as a rotor, 3°×R9.7 should be used.

The curable resin composition of the present invention as described above, contains the oligomer (I), whereby it is possible to form a cured product which is flexible and has color unevenness suppressed, at a high curing speed. Further, the polyol (A1) has no oxyethylene group, whereby the flexibility of a cured product will be good, and the haze will be small so that the transparency will be good. Therefore, the curable resin composition of the present invention is useful particularly as a curable resin composition to form a cured resin layer in an image display apparatus having a protective plate laminated on a display device via the cured resin layer, or as a curable resin composition to form a resin layer in a laminated glass having the resin layer between a pair of glass plates.

Further, the curable resin composition of the present invention is useful also for applications to e.g. an adhesive, a coating agent, etc. in addition to the above application as a curable resin composition to form a cured resin layer in the laminate.

### <Laminate>

The laminate of the present invention is a laminate comprising a pair of substrates and a cured resin layer sandwiched between the pair of substrates, wherein the cured resin layer is a layer of a cured resin formed by curing the curable resin composition of the present invention.

### [Substrates]

The substrates in the laminate of the present invention may be transparent substrates or non-transparent substrates. Further, each substrate may be a multi-layered structure or a single-layered structure. At least one of the pair of substrates is preferably a transparent substrate. More preferably, both of the pair of substrates are transparent substrates. Here, in the case of curing the curable resin composition of the present invention by irradiation with light, at least one of the substrates is required to be a transparent substrate, and through such a transparent substrate, light is applied to the curable resin composition. In the case of heat-curing the curable resin composition of the present invention, both of the pair of substrates may be non-transparent substrates.

Further, in a case where one of the pair of substrates is a display device such as a liquid crystal display device or an organic EL display device, it is common that the display device is non-transparent as a whole. However, the display device usually has a multi-layered structure, and it is common that a layer on the viewing surface side from the display layer (such as a liquid crystal layer or an organic EL layer) is transparent and a layer on the non-viewing surface side from the display layer is non-transparent. Therefore, when the entire image display apparatus having a protective plate laminated on the surface on the viewing surface side of a display device via the cured resin layer, is regarded as a laminate of the present invention, the laminate of the present invention is a non-transparent laminate. Further, when the outermost layer on the viewing surface side of a display device (e.g. a polarizing plate layer of a liquid crystal display device) is regarded as a substrate of the present invention, the portion comprising the outermost layer on the viewing surface side, the cured resin layer and the protective plate, is a laminate of the present invention, and the above image display apparatus is regarded as an image display apparatus having the laminate of the present invention.

The thickness of the substrate is not particularly limited, but a substrate having a thickness at a level of securing self-reliance is preferred. Therefore, for example, in the case of a substrate made of a resin, it is preferably not such a thin one as called a film, but a substrate having such a thickness as called a plate.

The shape of the substrate is not particularly limited and may, for example, be rectangular.

The size of the substrate is not particularly limited, and in the case of using it as a transparent member to be installed at an opening portion of a vehicle or building, it is preferably one having at least one side of at least 300 mm, more preferably one having at least one side of at least 600 mm. In usual applications to vehicles or buildings, a size of at most 4 m² is proper. Further, in a case where the substrate is a display device or the outermost portion on its viewing surface side, the size of the substrate is at least the size of the display device (a rectangular shape having at least one side of at least 20 mm).

As a transparent substrate, a glass plate or a resin plate may be mentioned. When glass plates are used as the pair of substrates, a laminated glass is obtainable. When as the resin plate, a polycarbonate plate is used, a transparent panel which has a high impact resistance and is light in weight, is obtainable. Further, a glass plate and a resin plate may be used in combination. The resin plate may, for example, be a single layered sheet of a resin such as a polymethyl methacrylate, a cycloolefin polymer, a polyamide, a polyimide, a polystyrene or an aramide, in addition to a polycarbonate, or a laminated sheet having layers of such resins, but it is not limited thereto.

The transparent substrate to be used as a protective plate for a display device, is preferably a glass plate from the viewpoint of chemical resistance, etc.

The non-transparent substrate is not limited to a display device and may, for example, be a metal plate, a non-transparent resin plate or other non-transparent plates. Further, even as a display device, there may be one which is wholly transparent (one wherein the display portion may temporarily become non-transparent), and such a display device corresponds to a transparent substrate.

The cured resin layer is a layer made of a cured product of the curable resin composition of the present invention.

The thickness of the cured resin layer is preferably from 0.01 to 0.5 mm, more preferably from 0.05 to 0.3 mm. When the thickness of the cured resin layer is at least the lower limit value, the mechanical strength of the laminate will be good. When the thickness of the cured resin layer is at most the upper limit value, the laminate will be excellent in that it is light in weight.

In the laminate of the present invention as described above, the cured resin layer sandwiched between the substrates is made of a cured product of the curable resin composition of the present invention, whereby the cured resin layer is flexible and has color unevenness suppressed, and the laminate can be produced with high productivity.

### <Process for producing laminate>

The laminate of the present invention is preferably produced by a production process using a vacuum lamination method. The vacuum lamination method is disclosed in WO08/081838 and WO09/016943. The process for producing a laminate of the present invention using the vacuum lamination method comprises the following first step and second step.

First step: a laminate precursor having the curable resin composition of the present invention accommodated between a pair of substrates and hermetically sealed in a reduced pressure atmosphere, is formed.

Second step: the curable resin composition in the laminate precursor is cured in an atmosphere having a pressure higher than the above reduced pressure atmosphere.

### [First step]

So long as the curable resin composition is hermetically sealed and formed into a laminate precursor in a reduced pressure atmosphere, it is not necessary to carry out all operation in the first step in a reduced pressure atmosphere. For example, in a case where a sealing material is provided along the entire periphery on one substrate, and after supplying the curable resin composition to inside of the sealing material on the substrate, the other substrate is overlaid, so long as a reduced pressure atmosphere is formed before overlaying the other substrate, any operation prior to it may be carried out in the atmospheric pressure atmosphere. Further, with a view to preventing formation of air bubbles in the curable resin composition, it is also preferred to overlay the other substrate after sufficiently exposing the curable resin composition to the reduced pressure atmosphere.

The reduced pressure atmosphere in the first step is preferably a pressure atmosphere of at most 1 kPa, more preferably a pressure atmosphere of at most 100 Pa. If the pressure of the reduced pressure atmosphere is too low, the monomer, etc. in the curable resin composition are likely to volatilize, and therefore, the reduced pressure atmosphere is preferably a pressure atmosphere of at least 1 Pa, more preferably a pressure atmosphere of at least 10 Pa.

The adhesion strength between the pair of substrates and the sealing material may be within such a range that a gas will not enter from the interface between the substrates and the sealing material when in the second step, the laminate precursor is placed in an atmosphere having a pressure higher than the reduced pressure atmosphere.

For example, by using a pressure sensitive adhesive, the adhesion strength between the substrates and the sealing material can be increased. Further, by placing a curable adhesive at the interface between the substrates and the sealing material and curing the adhesive after forming the laminate precursor, it is possible to increase the adhesion strength between the substrates and the sealing material. Further, by forming the sealing material from a curable resin and curing the sealing material itself after forming the laminate precursor, it is also possible to increase the adhesion strength between the substrates and the sealing material.

The sealing material may, for example, be a double-sided adhesive tape.

### [Second step]

In an atmosphere having a pressure higher than the reduced pressure atmosphere in the first step, the curable resin composition in the laminate precursor is cured. In a case where the curable resin composition is heat-curable, it is cured by heating, and in a case where the curable resin composition is photo-curable, it is cured by irradiation with light. Photocuring can be conducted by applying light from a light source such as an ultraviolet lamp through a transparent substrate. The curable resin composition cures to form a cured resin layer, whereby a laminate is obtainable.

In the production process of the present invention, it is preferred to incorporate a photopolymerization initiator (IV) to the curable resin composition, and to cure the curable resin composition by irradiation with light in the second step.

According to the production process of the present invention, even if air bubbles remain in the curable resin composition in the first step, such air bubbles tend to disappear before curing the curable resin composition in the second step, and a cured resin layer having no air bubbles tends to be readily obtainable. This may be explained as follows.

When, in the second step, the laminate precursor formed in the first step is placed in an atmosphere having a pressure higher than the reduced pressure atmosphere in the first step, the pressure outside of the substrates becomes higher than the inside pressure, whereby a pressure is exerted from the substrates to the curable resin composition. Further, inside of air bubbles in the curable resin composition, there is a pressure of the reduced pressure atmosphere of the first step, and the volume of air bubbles will shrink due to the pressure exerted to the curable resin composition in the second step, or a gas in air bubbles will be dissolved in the curable resin composition, whereby air bubbles will disappear.

In order to let air bubbles in the curable resin composition disappear sufficiently, it is preferred to hold the laminate precursor in an atmosphere having a pressure higher than the reduced pressure atmosphere for a while before curing the curable resin composition in the second step. The holding time is preferably at least 5 minutes. Here, in a case where there is no air bubble, or air bubbles are fine and will readily disappear, the holding time may be less than 5 minutes.

In the second step, the atmosphere having a pressure higher than the reduced pressure atmosphere is preferably a pressure atmosphere of at least 50 kPa, more preferably a pressure atmosphere of at least 100 kPa, and from the viewpoint of easy control of the pressure atmosphere, particularly preferred is the atmospheric pressure atmosphere.

The pressure atmospheres in the first step and the second step are particularly preferably adjusted to be a pressure atmosphere of at most 100 Pa in the first step and the atmospheric pressure atmosphere in the second step.

Now, with reference to Fig. 1, an example of the process for producing a laminate of the present invention will be described. In this example, each of the pair of substrates is a transparent substrate.

In the first step, a sealing material 12 is provided along the entire periphery on one transparent substrate 10 (hereinafter referred to simply as a "substrate 10"), an ultraviolet-curable resin 36 for sealing is applied on the sealing material 12, the curable resin composition 14 is supplied on the surface of the substrate 10 surrounded by the sealing material 12, and the substrate 10 is set horizontally in a vacuum chamber 26 so that the layer of the curable resin composition 14 faces upward. Further, the other transparent substrate 16 (hereinafter referred to simply as a "substrate 16") is held by suction pads 32 to an upper platen 30 which is movable up and down by a cylinder 34 in the vacuum chamber 26, so that it faces horizontally above the substrate 10. The vacuum chamber 26 is closed, and a vacuum pump 28 is operated for evacuation to bring inside of the vacuum chamber 26 to a predetermined reduced pressure atmosphere. Then, the cylinder 34 is operated to let the substrate 16 descend thereby to have the layer of the curable resin composition 14 sandwiched by the substrate 10 and the substrate 16 to form a laminate precursor having the curable resin composition 14 hermetically sealed by the substrate 10, the substrate 16 and the sealing material 12.

In the second step, inside of the vacuum chamber 26 is returned to the atmospheric pressure atmosphere, the laminate precursor is taken out from the vacuum chamber 26, and in the atmospheric pressure atmosphere, the curable resin composition in the laminate precursor is cured by heating or irradiation with light to obtain a laminate.

According to the process for producing a laminate of the present invention as described above, it is possible to form a cured resin layer which is flexible and has color unevenness suppressed, at a sufficient curing speed, and it is thus possible to produce a laminate of high quality in high productivity.

Further, the laminate of the present invention may be one produced by a known process other than the above described process.

### EXAMPLES

Now, the present invention will be described in detail with reference to Examples, but it should be understood that the present invention is by no means restricted by the following description.

### [Production Example 1: Production of polyol (A1-1)]

Into a pressure resistant reactor equipped with an agitator and a nitrogen-introducing tube, 0.2 g of zinc hexacyanocobaltate-tert-butyl alcohol complex as the catalyst (a13) and 400 g of EXCENOL 1020 (polyoxypropylene glycol (molecular weight of 1,000 as calculated from a hydroxyl value of 112.2 mgKOH/g) manufactured by Asahi Glass Company Limited) as the initiator (a11) were charged, and after adjusting the atmosphere to be a nitrogen atmosphere of 130°C, 3,600 g of PO as the alkylene oxide (a12) was added at a constant speed over a period of 7 hours. Then, after confirming that lowering of the inner pressure of the pressure resistant reactor terminated, the product was withdrawn to obtain 4,000 g of a polyoxypropylene glycol (polyol (A1-1)) having a hydroxy value of 11.1 mgKOH/g (molecular weight calculated from the hydroxy value: 10108).

### [Production Example 2: Production of polyol (A1-2)]

A polyoxypropylene polyol (polyol (A1-2)) having a hydroxy value of 6.3 mgKOH/g (molecular weight calculated from the hydroxy value: 17810) was obtained in the same manner as in Production Example 1 except that 7,200 g of PO was introduced at a constant speed over a period of 7 hours.

### [Production Example 3: Production of polyol (X-1)]

Into a pressure resistant reactor equipped with an agitator and a nitrogen-introducing tube, 0.2 g of zinc hexacyanocobaltate-glyme complex as a catalyst and 700 g of EXCENOL 720 (polyoxypropylene glycol (molecular weight of 700 as calculated from a hydroxyl value of 160.3 mgKOH/g) manufactured by Asahi Glass Company Limited) as an initiator were charged, and after adjusting the atmosphere to be a nitrogen atmosphere of 130°C, 2,340 g of PO was reacted for 5 hours and then the catalyst was deactivated. Then, 12 g of potassium hydroxide was added as a catalyst, and dehydration treatment was conducted at 120°C for 2 hours, whereupon the obtained polyoxypropylene glycol was alcoholated and then, 960 g of EO was reacted. From the pressure resistant reactor, the product was withdrawn to obtain a polyoxyalkylene glycol (polyol (X-1)) having a hydroxy value of 28.7 mgKOH/g (molecular weight calculated from the hydroxy value: 3909).

The polyols obtained in Production Examples 1 to 3 are shown in Table 1. The "EO content" is a proportion of oxyethylene groups in 100 mass% of all oxyalkylene groups in the polyol.

**[Table 1]**

| | Polyol | Number of functional groups | Hydroxy value [mgKOH/g] | Molecular weight calculated from hydroxy value | EO content [mass%] |
|---|---|---|---|---|---|
| Production Example 1 | A1-1 | 2 | 11.1 | 10108 | 0 |
| Production Example 2 | A1-2 | 2 | 6.3 | 17810 | 0 |
| Production Example 3 | X-1 | 2 | 28.7 | 3909 | 24 |

### [Example 1]

Into a reactor equipped with an agitator and a nitrogen-introducing tube, 1,936.7 g (0.192 mol) of polyol (A1-1) obtained in Production Example 1 and 51.9 g (0.233 mol) of isophorone diisocyanate (hereinafter referred to as "IPDI") as the polyisocyanate (A2) were charged and reacted at 70°C for 10 hours in the presence of 0.159 g of dioctyltin distearate (hereinafter referred to as "DOTDS") to obtain an isocyanate group-terminated urethane prepolymer (prepolymer (A-1)). The blend amount of IPDI to polyol (A1-1) was 121 by isocyanate index. The isocyanate group content in prepolymer (A-1) was 0.2429 mass%.

To 1,988.7 g (amount of isocyanate groups: 0.115 mol) of prepolymer (A-1), 0.54 g of dibutyltin dilaurate (hereinafter referred to as "DBTDL"), 0.6 g of 2,5-di-tert-butylhydroquinone (hereinafter referred to as "DtBHQ") and 13.4 g (amount of hydroxy groups: 0.115 mol) of 2-hydroxyethyl acrylate (hereinafter referred to as "HEA") as the compound (B1) were added, and while measuring the isocyanate group content by NCO titration in accordance with JIS K1603-1, the reaction was conducted until isocyanate groups disappeared, to obtain an urethane acrylate oligomer (oligomer (I-1)) as shown in Table 2. In the above reaction, the molar ratio of isocyanate groups in prepolymer (A-1):hydroxy groups in the compound (B) was 1:1.

40 g of oligomer (I-1), 30 g of 4-hydroxybutyl acrylate (hereinafter referred to as "4HBA") as the monomer (II-1) and 30 g of lauryl acrylate (hereinafter referred to as "LA") as the monomer (III) were mixed, and further, 3 g of 1-hydroxycyclohexylphenyl ketone (hereinafter referred to as "HCHPK") as the photopolymerization initiator (IV), 0.3 g of IRGANOX-1010 (manufactured by BASF) as an anti-oxidant and 0.04 g of DtBHQ as a polymerization inhibitor were added and mixed to prepare a curable resin composition.

### [Example 2]

Into a reactor equipped with an agitator and a nitrogen-introducing tube, 491.0 g (0.0273 mol) of polyol (A1-2) obtained in Production Example 2 and 7.4 g (0.0333 mol) of IPDI as the polyisocyanate (A2) were charged and reacted at 70°C for 3 hours in the presence of 0.0398 g of DOTDS to obtain an isocyanate group-terminated urethane prepolymer (prepolymer (A-2)). The blend amount of IPDI to polyol (A1-2) was 122 by isocyanate index. The isocyanate group content in prepolymer (A-2) was 0.141 mass%.

To 498.4 g (amount of isocyanate groups: 0.0167 mol) of prepolymer (A-2), 0.14 g of DBTDL, 0.15 g of DtBHQ and 1.94 g (amount of hydroxy groups: 0.0167 mol) of HEA as the compound (B1) were added, and in the same manner as in Example 1, an urethane acrylate oligomer (oligomer (I-2)) as shown in Table 2 was obtained.

A curable resin composition was prepared in the same manner as in Example 1 except that oligomer (I-2) was used instead of oligomer (I-1).

### [Comparative Example 1]

Into a reactor equipped with an agitator and a nitrogen-introducing tube, 460.3 g (0.1177 mol) of polyol (X-1) obtained in Production Example 3 and 31.9 g (0.143 mol) of IPDI as a polyisocyanate were charged and reacted at 70°C for 10 hours in the presence of 0.039 g of DOTDS to obtain an isocyanate group-terminated urethane prepolymer (prepolymer (Y-1)). The blend amount of IPDI to polyol (X-1) was 121 by isocyanate index. The isocyanate group content in prepolymer (Y-1) was 0.0319 mass%.

To 492.2 g (amount of isocyanate groups: 0.0559 mol) of prepolymer (Y-1), 0.135 g of DBTDL, 0.15 g of DtBHQ and 6.5 g (amount of hydroxy groups: 0.0559 mol) of HEA as the compound (B1) were added, and in the same manner as in Example 1, an urethane acrylate oligomer (oligomer (Z-1)) as shown in Table 2 was obtained.

A curable resin composition was prepared in the same manner as in Example 1 except that oligomer (Z-1) was used instead of oligomer (I-1).

### [Comparative Example 2]

40 g of oligomer (Z-1), 30 g of 4HBA and 30 g of LA were mixed, and further, 3 g of HCHPK as a photopolymerization initiator, 0.3 g of IRGANOX-1010 (manufactured by BASF) as an anti-oxidant, 0.04 g of DtBHQ as a polymerization inhibitor and 0.4 g of n-dodecanethiol as a chain transfer agent were added and mixed to prepare a curable resin composition.

### [Comparative Example 3]

40 g of oligomer (Z-1), 30 g of 4HBA and 30 g of LA were mixed, and further, 3 g of HCHPK as a photopolymerization initiator, 0.3 g of IRGANOX-1010 (manufactured by BASF) as an anti-oxidant, 0.04 g of DtBHQ as a polymerization inhibitor and 0.8 g of n-dodecanethiol as a chain transfer agent were added and mixed to prepare a curable resin composition.

### [Comparative Example 4]

40 g of oligomer (I-1), 30 g of 2-hydroxybutyl methacrylate and 30 g of lauryl methacrylate were mixed, and further, 3 g of HCHPK as a photopolymerization initiator, 0.3 g of IRGANOX-1010 (manufactured by BASF) as an anti-oxidant and 0.04 g of DtBHQ as a polymerization inhibitor were added and mixed to prepare a curable resin composition.

### [Comparative Example 5]

A curable resin composition was prepared in the same manner as in Comparative Example 4 except that oligomer (I-2) was used instead of oligomer (I-1) in Comparative Example 4.

### [Measurement of viscosities of unsaturated urethane oligomers]

The viscosities of oligomers (I-1), (I-2) and (Z-1) were measured at 25°C by means of an E-type viscometer (RE-85U, manufactured by Toki Sangyo Co., Ltd.).

### [Storage elastic modulus of cured product]

On a soda lime glass plate, the curable resin composition obtained in each Example was applied in a thickness of 0.4 mm and cured by irradiation with ultraviolet light (light source: mercury xenon lamp manufactured by Ushio Electric Co., Ltd., illuminance: 400 mW/cm², cumulative light quantity: 6,000 mJ/cm²) in a nitrogen stream. Then, the storage elastic modulus of the cured product was measured by means of Rheometer MCR-301 manufactured by Anton Paar. The measurement conditions were a frequency of 1 Hz, a strain of 1 % and a temperature of 35°C.

### [Curability test]

On a soda lime glass plate, the curable resin composition obtained in each Example was applied in a thickness of 0.1 mm and irradiated with ultraviolet light (light source: Fusion D-bulb metal halide lamp, illuminance: 800 mW/cm², cumulative light quantity: 500 mJ/cm²) in a nitrogen stream. The sample after irradiation with ultraviolet light was measured by FT-IR, and the curability was evaluated by the following standards. "○ (good)": the absorbance at 810 cm⁻¹ attributable to an unsaturated bond of an acryl group is less than 5% of the absorbance before irradiation with ultraviolet light. "x (no good)": the absorbance at 810 cm⁻¹ attributable to an unsaturated bond of an acryl group is at least 5% of the absorbance before irradiation with ultraviolet light.

### [Reliability test]

On a soda lime glass plate having a thickness of 2 mm, the curable resin composition obtained in each Example was applied in a thickness of 0.1 mm, and further, thereon, a soda lime glass plate having a thickness of 2 mm was overlaid, to prepare a laminate sample. The laminate sample was irradiated with ultraviolet light (light source: Fusion D-bulb metal halide lamp, illuminance: 800 mW/cm², cumulative light quantity: 500 mJ/cm²). The laminate sample after irradiation with ultraviolet light was left to stand under conditions of 65°C and a humidity of 93%, and upon expiration of 500 hours, the reliability was evaluated by the following standards. "○ (good)": no peeling is observed in the laminate sample. "× (no good)": peeling is observed in the laminate sample.

### [Color unevenness test]

A liquid crystal display device was taken out from a commercially available 7-inch liquid crystal digital photo frame (DPF-0720, manufactured by Sony Corporation). The liquid crystal display device was such that the display mode was VA (vertical alignment), and the size of the display portion was 88 mm in length and 156 mm in width. On both surfaces of the liquid crystal display device, polarizing plates were bonded, and a printed circuit board was joined to the end of FPC on the long side. This liquid crystal display device was designated as a display device A.

On the upper surface of a lower platen in a vacuum apparatus wherein a lifting and lowering device with a pair of platens was installed, the display device A was flatly placed so that the surface on which the photocurable resin composition was to be formed, faced upward.

A resin composition C for forming a sealing portion obtained in the same manner as in Examples of WO2011/052747, was applied by a dispenser along the entire periphery at a position of about 5 mm along the outer periphery of the display device A, so that the width would be 1 mm and the coating thickness would be about 0.4 mm, to form an uncured sealing portion. Then, in a region inside of the uncured sealing portion, the curable resin composition in Example 2 (the photocurable resin composition for forming a resin layer) was supplied at plural portions so that the film thickness would be 200 µm.

A glass plate B was set on the lower surface of an upper platen of the lifting and lowering device in the vacuum apparatus, so that it faced the display device A. Further, the glass plate B was held so that the distance to the display device A would be 30 mm in a vertical direction.

The vacuum apparatus was brought to a sealed state and evacuated until the pressure in the vacuum apparatus became about 10 Pa. By the lifting and lowering device in the vacuum apparatus, the upper and lower platens were brought close to each other and pressed under a pressure of 2 kPa for 1 minute. The electrostatic chuck was neutralized to let the glass plate B be released from the upper platen, and inside of the vacuum apparatus was returned to the atmospheric pressure in about 15 seconds to obtain a laminate precursor D having the photocurable resin composition for forming a resin layer hermetically sealed by the display device A, the glass plate B and the uncured sealing portion. In the laminate precursor D, the shape of the uncured sealing portion was maintained to be substantially in the initial state.

The laminate precursor D was irradiated with ultraviolet light (light source: Fusion D-bulb metal halide lamp, illuminance: 800 mW/cm², cumulative light quantity: 500 mJ/cm²) from the glass plate B side, to let the uncured sealing portion and the photocurable resin composition for forming a resin layer be cured. The obtained display apparatus was designated as a display apparatus E1.

Display apparatus E2 to E4 were obtained in the same manner by using compositions in Comparative Examples 1, 4 and 5 instead of the composition in Example 2 as a photocurable resin composition for forming a resin layer.

Each of the display apparatus E1 to E4 was returned to a liquid crystal monitor chassis from which the liquid crystal device was taken out, wirings were reconnected, and then, the liquid crystal monitor was set so that the display device A bonded to the glass plate B became vertical. After being left to stand still for 5 days, it was switched on, whereupon the display image was evaluated. "○ (good)": the image is uniform over the entire surface of the display portion. " x (no good)": the image has nonuniform (uneven) portions at a part of the display portion.

### [Haze]

The haze was measured by the following method.

On a soda lime glass plate of 100 mm x 100 mm x 2 mm having four sides enclosed by a double-sided adhesive tape having a thickness of 0.2 mm and a width of 5 mm, the curable resin composition prepared in each Example or Comparative Example was dropped in such an amount that the thickness would be 200 µm. Then, thereon, a soda lime glass plate of 100 mm × 100 mm x 2 mm was overlaid so as not to let air bubbles enter into the curable resin composition. Then, the obtained laminated sample was transported by a UV conveyor manufactured by ORC Manufacturing Co., Ltd. (trade name: QRM-2288, HgXe lamp) and irradiated with light of an illuminance of 100 mW/cm² and a cumulative light quantity of 3,000 mJ/cm² to obtain a cured product, which was used as a sample for measuring the haze.

The haze of the obtained sample was measured by means of a color/haze meter (trade name: COH400) manufactured by Nippon Denshoku Industries Co., Ltd. The evaluation was made in accordance with the following standards. "○ (good)": the haze value is less than 1.0%. " x (no good)": the haze value is at least 1.0%.

The evaluation results in the respective Examples are shown in Table 2. Here, the abbreviations in Table 2 have the following meanings.
4HBA: 4-hydroxybutyl acrylate
LA: lauryl acrylate
2-HBMA: 2-hydroxybutyl methacrylate
LMA: lauryl methacrylate

**[Table 2]**

| | | Example 1 | Example 2 | Comparative Example 1 | Comparative Example 2 | Comparative Example 3 | Comparative Example 4 | Comparative Example 5 |
|---|---|---|---|---|---|---|---|---|
| Unsaturated urethane oligomer (I) | Type | I-1 | I-2 | Z-1 | Z-1 | Z-1 | I-1 | I-2 |
| | Type of polyol | A1-1 | A1-2 | X-1 | X-1 | X-1 | A1-1 | A1-2 |
| | Hydroxy value of polyol | 11.1 | 6.3 | 28.7 | 28.7 | 28.7 | 11.1 | 6.3 |
| | Index | 121 | 122 | 121 | 121 | 121 | 121 | 121 |
| | Viscosity [Pa·s (25°C)] | 1000 | 840 | 900 | 900 | 900 | 1000 | 840 |
| | Amount [g] | 40 | 40 | 40 | 40 | 40 | 40 | 40 |
| Monomer (II) | 4HBA [g] | 30 | 30 | 30 | 30 | 30 | - | - |
| Monomer (III) | LA[g] | 30 | 30 | 30 | 30 | 30 | - | - |
| Other monomers | 2-HBMA [g] | - | - | - | - | - | 30 | 30 |
| | LMA [g] | - | - | - | - | - | 30 | 30 |
| Amount of chain transfer agent [g] | | - | - | - | 0.4 | 0.8 | - | - |
| Evaluation | Storage elastic modulus [kPa] | 60 | 24 | 156 | 120 | 51 | 109 | 140 |
| | Curability test | ○ | ○ | ○ | ○ | × | × | × |
| | Reliability test | ○ | ○ | × | × | ○ | × | × |
| | Color unevenness test | - | ○ | × | - | - | × | × |
| | Haze | ○ | ○ | ○ | ○ | ○ | × | × |

As shown in Table 2, in Examples 1 and 2 representing the curable resin compositions of the present invention, the curing speed was fast, and a cured product having a low storage elastic modulus and being flexible was formed. Further, also in the reliability test, no peeling was observed, and the reliability was excellent. Further, in Examples 1 and 2, the haze value was good at a level of less than 1.0%, and the color unevenness was confirmed to have been suppressed. Further, the viscosities of oligomers (I-1) and (I-2) in Examples 1 and 2 were substantially equal to the viscosity of oligomer (Z-1) in Comparative Examples 1 to 3.

On the other hand, in Comparative Example 1 representing the curable resin composition containing oligomer (Z-1) obtained by using a polyol having a large hydroxy value, the storage elastic modulus of the cured product was high, whereby the flexibility was not sufficient, color unevenness was observed, and the reliability was also poor.

Also in Comparative Example 2 wherein a small amount of a chain transfer agent was incorporated to the curable resin composition containing oligomer (Z-1), the storage elastic modulus of the cured product was high, whereby the flexibility was not sufficient, and the reliability was also poor.

In Comparative Example 3 wherein a sufficient amount of a chain transfer agent was incorporated to the curable resin composition containing oligomer (Z-1), a flexible cured product having a low storage elastic modulus was formed, but the curing speed was slow.

In Comparative Examples 4 and 5 wherein although oligomer (I-1) was used, the monomer (II) was not used, and a monomer having a methacryloyloxy group was used, the haze value was high, the transparency was poor as compared with Examples 1 and 2, and also, color unevenness was observed.

The entire disclosures of Japanese Patent Application No. 2012-273563 filed on December 14, 2012 and Japanese Patent Application No. 2013-094659 filed on April 26, 2013 including specifications, claims, drawings and summaries are incorporated herein by reference in their entireties.

### REFERENCE SYMBOLS

10, 16: substrate, 12: sealing material, 14: curable resin composition, 26: vacuum chamber, 28: vacuum pump, 30: upper platen, 32: suction pad, 34: cylinder, 36: ultraviolet curable resin for sealing

## Claims

1. A curable resin composition comprising an unsaturated urethane oligomer (I) obtained by reacting the following prepolymer (A) and the following compound (B), and at least one monomer (II) selected from the group consisting of a monomer represented by the following formula (II-1), a monomer represented by the following formula (II-2), a monomer represented by the following formula (II-3) and a monomer represented by the following formula (II-4),
Prepolymer (A): an isocyanate group-terminated urethane prepolymer obtained by reacting the following polyol (A1) and a polyisocyanate (A2) under such a condition that the isocyanate index is more than 100 and at most 160,
Polyol (A1): a polyoxyalkylene polyol having a hydroxy value of from 3 to 13 mgKOH/g, obtained by reacting an alkylene oxide (a12) having at least 3 carbon atoms to an initiator (a11) having an average number of active hydrogen atoms of from 2 to 4,
Compound (B): a compound having the following curable functional group and a hydroxy group,
Curable functional group: a group represented by CH₂=C(R¹)C(O)O- (wherein R¹
is a hydrogen atom or a methyl group), 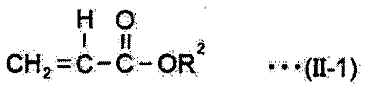 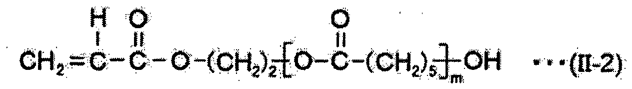 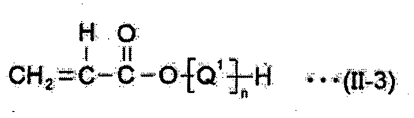 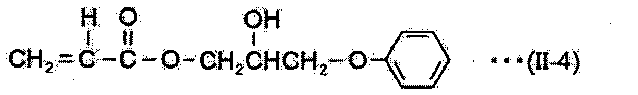 (in the above formulae, R² is a C₂₋₈ hydroxyalkyl group having one or two hydroxy groups, m is an integer of from 1 to 3, Q¹ is a C₂₋₄ oxyalkylene group, and n is an integer of from 2 to 8).

2. The curable resin composition according to Claim 1, wherein the polyisocyanate (A2) is a polyisocyanate selected from the group consisting of an alicyclic polyisocyanate, an aliphatic polyisocyanate and modified polyisocyanates obtainable by modifying them.

3. The curable resin composition according to Claim 1 or 2, wherein the compound (B) is a compound represented by the following formula (B1): 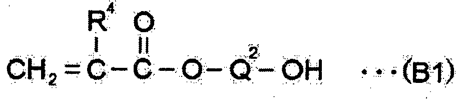 (in the above formula, R⁴ is a hydrogen atom or a methyl group, and Q² is a C₂₋₁₂ alkylene group.)

4. The curable resin composition according to any one of Claims 1 to 3, wherein the content of the unsaturated urethane oligomer (I) in the curable resin composition is from 20 to 75 mass%.

5. The curable resin composition according to any one of Claims 1 to 4, wherein the content of the monomer (II) in the curable resin composition is from 25 to 65 mass%.

6. The curable resin composition according to any one of Claims 1 to 5, which further contains a monomer represented by the following formula (III): 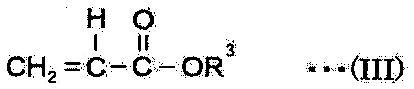 (in the above formula, R³ is a C₈₋₂₂ alkyl group.)

7. The curable resin composition according to Claim 6, wherein the content of the monomer represented by the formula (III) in the curable resin composition is from 35 to 50 mass%.

8. The curable resin composition according to any one of Claims 1 to 7, which further contains a photopolymerization initiator (IV).

9. The curable resin composition according to any one of Claims 1 to 8, wherein in production of a laminate comprising a pair of substrates and a cured resin layer sandwiched between the pair of substrates, the curable resin composition is used for forming the cured resin layer.

10. A laminate comprising a pair of substrates and a cured resin layer sandwiched between the pair of substrates, wherein the cured resin layer is a layer of a cured resin formed by curing the curable resin composition as defined in any one of Claims 1 to 8.

11. The laminate according to Claim 10 wherein one of the pair of substrates is a display device and the other is a transparent protective plate, and the cured resin layer is in contact with the viewing side of the display device.

12. A process for producing a laminate, comprising
a first step of forming a laminate precursor having the curable resin composition as defined in any one of Claims 1 to 8 accommodated between a pair of substrates and hermetically sealed under reduced pressure atmosphere, and
a second step of curing the curable resin composition in the laminate precursor in an atmosphere having a pressure higher than the reduced pressure atmosphere.

13. The process for producing a laminate according to Claim 12, wherein the reduced pressure atmosphere is an atmosphere having a pressure of at most 100 Pa, and the atmosphere having a pressure higher than the reduced pressure atmosphere is an atmospheric pressure atmosphere.

14. The process for producing a laminate according to Claim 12 or 13, wherein at least one of the pair of substrates is a transparent substrate, and in the second step, the curable resin composition is cured by irradiation with light.

15. The process for producing a laminate according to any one of Claims 12 to 14, wherein one of the pair of substrates is a display device and the other is a transparent protective plate, and the curable resin composition is accommodated between the viewing side of the display device and the protective plate.
